(19) Europäisches Patentamt
European Patent Office
Office européen des brevets

(11) **EP 2 234 358 B1**

(12) **EUROPEAN PATENT SPECIFICATION**

(45) Date of publication and mention
of the grant of the patent:
**03.04.2013 Bulletin 2013/14**

(21) Application number: **09705669.1**

(22) Date of filing: **06.01.2009**

(51) Int Cl.:
***H04L 27/34*** *(2006.01)*

(86) International application number:
**PCT/CN2009/070045**

(87) International publication number:
**WO 2009/094913 (06.08.2009 Gazette 2009/32)**

(54) **Method and apparatus for layered modulation with equal power**

Verfahren und Vorrichtung zum geschichteten Modulation mit gleicher Leistung

Méthode et appareil pout modulation en couches avec une puissance égale

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **24.01.2008 CN 200810000246**
**27.06.2008 CN 200810127548**

(43) Date of publication of application:
**29.09.2010 Bulletin 2010/39**

(73) Proprietor: **Huawei Technologies Co., Ltd.**
**Longgang District, Shenzhen**
**Guangdong 518129 (CN)**

(72) Inventors:
• **CHEN, Dageng**
**c/o Huawei Technologies Co.Ltd., Int.Prop.Dept.**
**518129 Shenzhen (CN)**
• **WANG, Yi**
**c/o Huawei Technologies Co.Ltd., Int.Prop.Dept.**
**518129 Shenzhen (CN)**

(74) Representative: **Pfenning, Meinig & Partner GbR**
**Patent- und Rechtsanwälte**
**Theresienhöhe 13**
**80339 München (DE)**

(56) References cited:
**WO-A1-01/39454        WO-A1-2006/000941**
**WO-A1-2007/105762      WO-A2-2007/136211**
**CN-A- 1 411 236        CN-A- 1 674 489**
**CN-A- 101 018 105**

• **DIVSALAR D ET AL: "COMBINED TRELLIS CODING WITH ASYMMETRIC MODULATIONS", GLOBECOM. NEW ORLEANS, DEC. 2 - 5, 1985; [PROCEEDINGS OF THE GLOBAL TELECOMMUNICATIONS CONFERENCE AND EXHIBITION (GLOBECOM)], NEW YORK, IEEE, US, vol. 2, 2 December 1985 (1985-12-02), pages 646-652, XP000794847,**

**Description**

**Field of the Invention**

The present invention relates to communication technologies, and in particular, to a method and apparatus for obtaining a Symbol Mapping Diversity (SMD), creating a constellation map and modulating.

**Background of the Invention**

In current communication systems, Phase-Shift Keying (PSK) and Quadrature Amplitude Modulation (QAM) are the most widely used modulation technologies.

In terms of multilayer modulation, the purpose of high-order QAM is to increase distance between constellation points and reduce the crosstalk between constellation points. In a high-order modulation scheme, such as 16QAM, a bit stream is usually mapped to a constellation map via unequal power mapping, which maps some bits to constellation points of higher power and map other bits to constellation points of lower power.

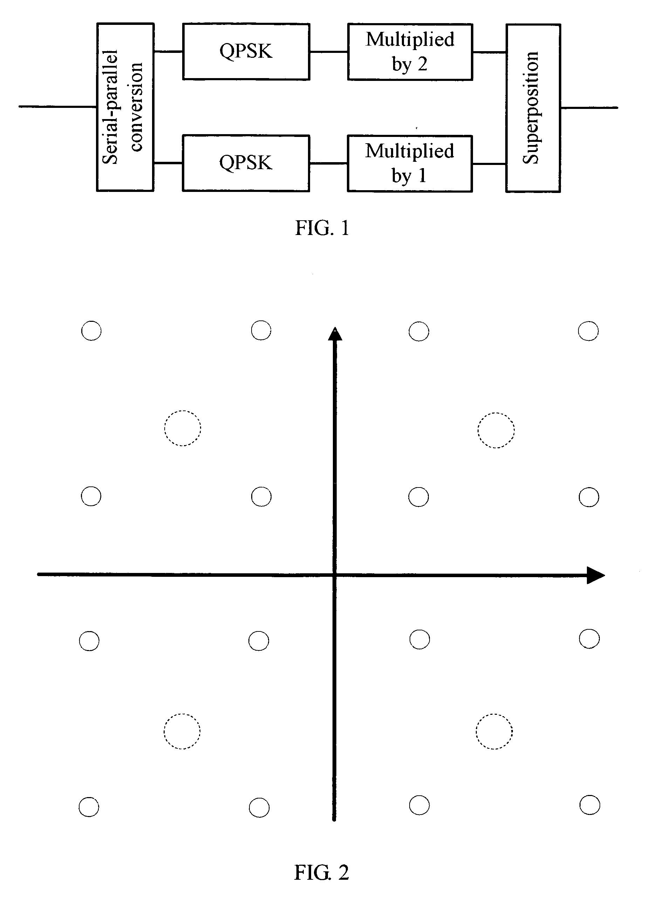

The prior art provides a 16QAM method. As shown in FIG 1, the method includes: performing serial-parallel conversion on an input bit stream and mapping the converted bit stream to different layers for modulation; performing Quadrature Phase-Shift Keying (QPSK) modulation on bit stream of first layer and multiplying the QPSK-modulated symbol amplitude by 2; performing QPSK modulation on bit stream of second layer and multiplying the modulated symbol amplitude by 1; and superposing the amplitude-adjusted symbols to create 16QAM symbols. In the 16QAM scheme, the purpose of the two-layer unequal power distribution of bit streams is to increase distance between constellation points and reduce crosstalk between constellation points.

FIG. 2 gives a 16QAM constellation map in the prior art. In FIG. 2, circles in solid lines represent the 16QAM constellation map. For description purposes, it is assumed that the constellation points corresponding to the symbols output by QPSK modulation in FIG. 1 are $\pm I \pm j$. Then the constellation points corresponding to the output symbols with amplitude 2 in the first layer are $\pm 2 \pm 2j$, in a one-to-one mapping with the four circles in broken lines in FIG. 2. The constellation points corresponding to the output symbols with amplitude I in the second layer are $\pm 1 \pm j$. Through superposition processing, the symbols are mapped to four new rectangular coordinate systems which take the four broken circles as origins of the new coordinate systems and thus a 16QAM constellation map is created.

The origins of the new rectangular coordinate systems are $\pm 2 \pm 2j$ away from origin of the rectangular coordinate system of the first-layer QPSK symbols. The four solid circles adjacent to each broken circle with an equal distance make up constellation map of the second-layer QPSK symbols.

Besides, WO 2007/136211 A2 discloses a QPSK/QPSK hierarchical modulation, in which the base layer and the enhancement layer are modulated by QPSK, and the base layer signal and the enhancement signal have different initial phase. WO 01/39454 A1 discloses that a hierarchical QAM system allows the transmission of different sources by embedding the relative constellation points. Document of "Combined Trellis Coding with Asymmetric Modulations" from Divsalar D discloses that by indeed designing the signal constellations to be asymmetric, one can obtain a significant performance improvement over symmetric constellations combined with trellis coding.

The prior art has the following problem: The constellation map of high-order QAM is created via unequal power mapping, where bits transmitted over the low power layer of a channel may be easily affected by channel fading and noise; as a result, Block Error Rate (BLER) at terminal receiver is high.

**Summary of the Invention**

The general purpose of the present invention is to provide a modulating method and apparatus and a transmitter which can reduce the BLER at a terminal.

It is an object of the present invention to provide a method and apparatus and a system for obtaining the Symbol Mapping Diversity (SMD) eliminating inter-layer interference caused by superposition during retransmission.

According to the first aspect of the present invention a method for creating a constellation map includes:

modulating an input bit stream of each layer with a same modulation scheme to obtain basic modulated symbols of the input bit stream of each layer;
performing phase shift on constellation maps corresponding to the basic modulated symbols of the input bit streams of at least two layers with different phase-shift factors; and
superposing the phase-shifted constellation maps corresponding to the basic modulated symbols of the input bit streams of the at least two layers.

According to a second aspect of the present invention a modulating method includes:

modulating an input bit stream of each layer with a same modulation scheme to obtain basic modulated symbols of the input bit stream of each layer, wherein the same modulation scheme is equal power Binary Phase Shift Keying, further referred to as BPSK, or equal power Quadrature Phase-Shift Keying, further referred to as QPSK;

performing phase shift on the basic modulated symbols of the input bit streams of at least two layers with different phase-shift factors; and

superposing the phase-shifted the basic modulated symbols of the input bit streams of the at least two layers.

According to a third aspect of the present invention a modulating apparatus includes at least two basic modulating units, at least two phase shifting units and a superposing unit, wherein

each basic modulating unit is configured to modulate an input bit stream of a corresponding layer to obtain basic modulated symbols of the bit stream of the corresponding layer, wherein a modulation scheme is adopted by each basic modulating unit, wherein the same modulation scheme is equal power Binary Phase Shift Keying, further referred to as BPSK, or equal power Quadrature Phase-Shift Keying, further referred to as QPSK;

each phase shifting unit is configured to perform phase shift on the basic modulated symbols of the input bit stream of the corresponding layer correspondingly output by each basic modulating unit with a phase-shift factor, wherein phase-shift factors adopted by each phase shifting unit are different from each other; and

a superposing unit is configured to superpose the phase-shifted basic modulated symbols of the input bit streams of the layers correspondingly output by the phase shifting units.

According to a fourth aspect of the present invention a transmitter includes:

a channel coding unit, configured to perform redundancy coding on input bit streams with a coding scheme and output the coded bit streams to a modulating apparatus, where the coding scheme of the redundancy coding is low density parity check codes, Turbo codes or convolutional codes; and

the modulating apparatus, configured to: perform serial-parallel conversion on the coded bit streams output by the channel coding unit and output the converted bit streams to different layers; modulate the converted input bit stream of each layer with a same modulation scheme to obtain basic modulated symbols of the converted input bit stream of each layer; perform phase shift on the basic modulated symbols of the converted input bit streams of the at least two layers respectively with different phase-shift factors to obtain modulated symbols of the converted input bit streams of at least two layers; and superpose the modulated symbols of the converted input bit streams of the at least two layers.

According to a fifth aspect of the present invention a method for obtaining an SMD includes:

receiving indication information indicating that retransmission is required, where the indication information is sent by a terminal if an error is detected in a transmission of a transmitted signal;

performing angle rotational superposition on basic modulated symbols of the transmitted signal to obtain a signal for retransmission, where the rotational superposition angle used to obtain the basic modulated symbols of the signal for retransmission is different from that used to obtain the basic modulated symbols of the transmitted signal; and

transmitting the signal for retransmission to the terminal, which processes the transmitted signal and the retransmitted signal jointly to obtain the SMD.

According to a sixth aspect of the present invention a system for obtaining an SMD includes:

an Angle Rotational Superposition Modulation (ARSM) apparatus connected to a terminal in a communicable way, where the ARSM apparatus is configured to: receive information which indicates that retransmission is required, where the information is sent by a terminal if an error is detected in a transmission of the transmitted signal; perform angle rotational superposition on basic modulated symbols of the transmitted signal to obtain a signal for retransmission, where the rotational superposition angle used to obtain the basic modulated symbols of the signal for retransmission is different from that used to obtain the basic modulated symbols of the transmitted signal; and transmit the signal for retransmission to the terminal, which processes the transmitted signal and the retransmitted signal jointly to obtain the SMD.

According to a seventh aspect of the present invention an ARSM apparatus includes:

a receiving module, configured to receive information which indicates that retransmission is required, where the information is sent by a terminal if an error is detected in a transmission of the transmitted signal;

an angle rotational superposing module, configured to perform rotational superposition on basic modulated symbols of the transmitted signal according to the indication received by the receiving module to obtain a signal for retransmission, where the rotational superposition angle used to obtain the basic modulated symbols of the signal for retransmission is different from that used to obtain the basic modulated symbols of the transmitted signal; and

a transmitting module, configured to transmit the signal for retransmission to the terminal.

The technical solutions provide the following advantages or benefits:

1. Bit streams are modulated with a same modulation scheme and phase shift is performed on the basic modulated symbols of at least two layers according to different phase-shift factors. Thus, equal power ARSM is implemented in at least two layers. The BLER at the receiver is therefore reduced.

2. The transmitter of the present invention modulates bit streams with a same modulation scheme to obtain basic modulated symbols and performs phase shift on the basic modulated symbols of at least two layers according to different phase-shift factors. Thus, equal power ARSM is implemented in at least two layers. The BLER at the receiver is therefore reduced.

3. With the ARSM method, system and apparatus of the present invention, rotational superposition is performed on the basic modulated symbols of the transmitted signal requiring retransmission to obtain the signal for retransmission. The rotational superposition angle used to obtain the signal for retransmission is different from that used to obtain the transmitted signal. Thus, the receiver can process the received transmitted signal and retransmitted signal jointly and therefore inter-layer interference caused by superposition can be eliminated effectively and the SMD can be obtained.

## Brief Description of the Drawings

FIG. 1 shows a 16QAM scheme in the prior art;
FIG. 2 shows a 16QAM constellation map in the prior art;
FIG. 3 shows a modulating apparatus in a first embodiment of the present invention;
FIG. 4 shows a transmitter in a second embodiment of the present invention;
FIG. 5 shows a transmitter in a third embodiment of the present invention;
FIG. 6a shows a constellation map created in a fourth embodiment of the present invention;
FIG. 6b shows a constellation map created in the fourth embodiment of the present invention;
FIG. 6c shows a constellation map created in the fourth embodiment of the present invention;
FIG. 7 shows a flowchart of a modulating method in a fifth embodiment of the present invention;
FIG. 8 shows a structure of an improved modulating method in an embodiment of the present invention;
FIG. 9 shows a performance curve of ARSM in an embodiment of the present invention and a performance curve of conventional 16QAM;
FIG. 10 shows a flowchart of a method for obtaining an SMD in an embodiment of the present invention;
FIG. 11 shows a structure of an ARSM apparatus in an embodiment of the present invention; and
FIG. 12 shows a structure of a transmit diversity modulating apparatus in an embodiment of the present invention.

## Detailed Description of the Embodiments

The embodiments of the present invention provide a method for creating a constellation map, a method and apparatus for modulating and a transmitter. The embodiments of the present invention help reduce the BLER of a terminal. Some other embodiments of the present invention provide a method, apparatus and system for obtaining a SMD. For easy understanding of the embodiments of the present invention, the embodiments will be described with reference to the accompanying drawings.

A modulating apparatus provided in an embodiment of the present invention includes:

at least two basic modulating units, configured to modulate input bit streams with a same modulation scheme to obtain basic modulated symbols;
at least two phase shifting units, configured to perform phase shift on basic modulated symbols of at least two layers output by the basic modulating unit according to different phase-shift factors, where the number of the phase shifting units is the same as the number of the basic modulating units; and
a superposing unit, configured to superpose the modulated symbols output by at least two of the phase shifting units.

In the embodiment of the present invention, basic modulated symbols of at least two layers are phase-shifted according to different phase-shift factors. Thus, equal power ARSM is implemented in at least two layers. The BLER at the terminal is therefore reduced.

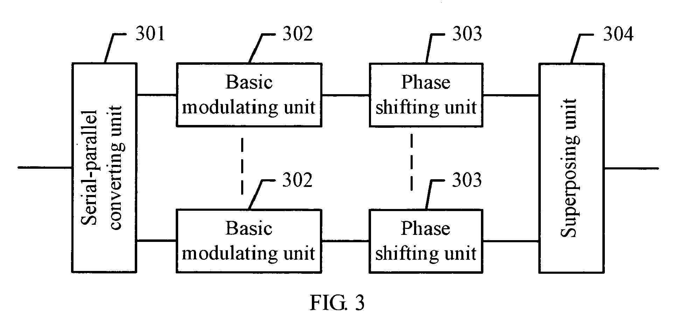

The first embodiment provides a modulating apparatus. As shown in FIG. 3, the apparatus includes: a serial-parallel converting unit 301, basic modulating units 302, phase shifting units 303, and a superposing unit 304.

The serial-parallel converting unit 301 is configured to perform serial-parallel conversion on input bit streams and distribute the converted bit streams to basic modulating units 302 of different layers.

The basic modulating units 302 are configured to modulate the bit streams output by the serial-parallel converting unit 301 with a same modulation scheme, such as equal power Binary Phase Shift Keying (BPSK) or QPSK. There are at least two basic modulating units. BPSK is a special application of QPSK. A QPSK symbol may be created by superposing two BPSK symbols whose phase difference is $\pi/2$.

The phase shifting units 303 are configured to perform phase shift on the basic modulated symbols output by the basic modulating units 302 according to different phase-shift factors, which usually differentiate different layers. The number of phase shifting units is the same as the number of basic modulating units. The phase-shift factor is expressed by $\exp(j*\phi)$, where $\phi$ represents the shift phase. $\exp(j*\phi) = e^{j\phi} = \cos\phi + j\sin\phi$.

The superposing unit 304 is configured to superpose the symbols output by the phase shifting unit 303 of each layer, thus completing the ARSM.

In the embodiment of the present invention, the modulating apparatus performs phase shift on the basic modulated symbols of at least two layers according to different phase-shift factors. Thus, equal power ARSM is implemented in at least two layers. The BLER at the terminal is therefore reduced.

It should be noted that the bit streams in the first embodiment of the present invention are the data streams of one service of one user.

The modulating apparatus in the first embodiment of the present invention may be implemented in the form of hardware or in form of software functions. The apparatus in the first embodiment of the present invention may be sold or used as an independent product or stored in a compute readable medium as a program.

In the first embodiment, different phase-shift factors are adopted to differentiate at least two layers. The differentiation of the remaining layers is not limited to the phase-shift factor. The remaining layers may be differentiated by power or other means.

The serial-parallel converting unit distributes the input streams to different layers. An interleaving unit may be adopted in each layer to rearrange the input streams according to a certain rule and then send the rearranged bit streams to the basic modulating units.

The apparatus in the first embodiment of the present invention is based on ARSM. It can create multiple types of ARSM-modulated constellation maps. Such constellation maps may be applied in different communication systems as the supplement to or substitute for PSK/QAM in the prior art.

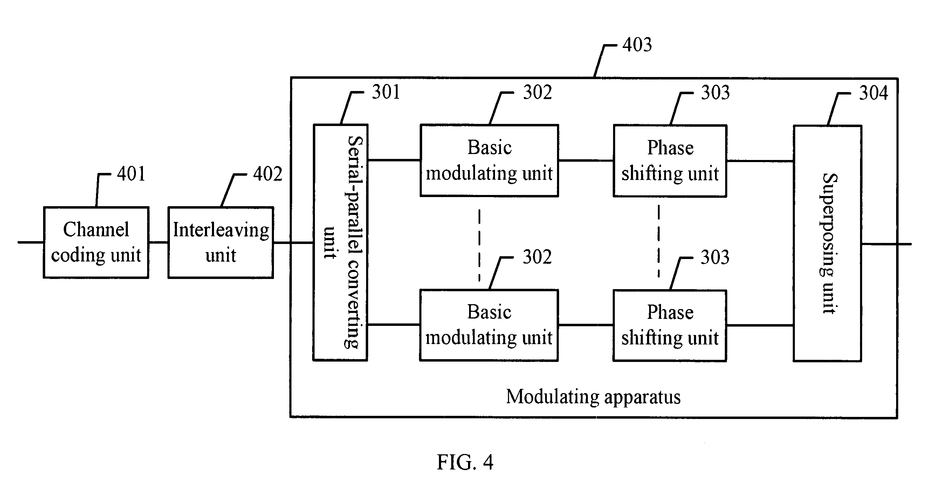

A transmitter is provided in the second embodiment of the present invention. As shown in FIG. 4, the transmitter includes: a channel coding unit 401, an interleaving unit 402, and a modulating apparatus 403.

The channel coding unit 401 is configured to perform redundancy coding on received data streams. The coding scheme of the redundancy coding usually includes: low density parity check codes, Turbo codes or convolutional codes.

The interleaving unit 402 is configured to rearrange the bit streams output by the channel coding unit 401 according to a certain rule.

The modulating apparatus 403 is configured to: perform serial-parallel conversion on the bit streams output by the interleaving unit 402, distribute the converted bit streams to different layers, modulate the bit streams of different layers to obtain basic modulated symbols, perform phase shift on the basic modulated symbols output by at least two layers according to different phase-shift factors, and superpose the phase-shifted symbols of each layer.

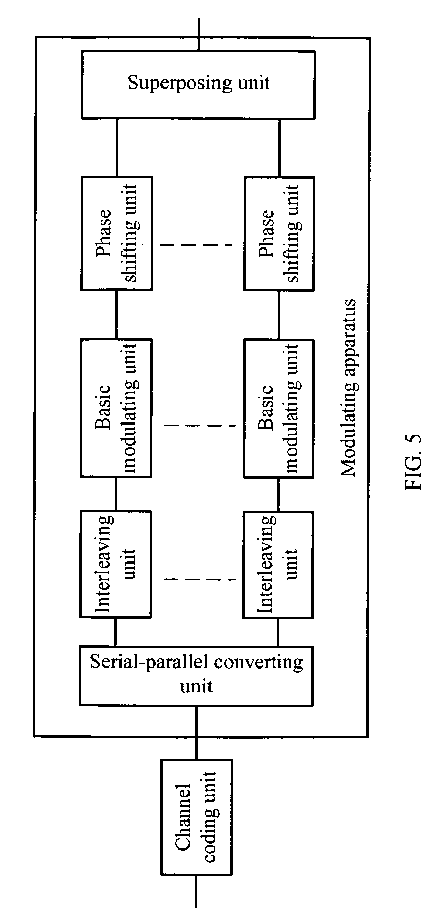

A transmitter provided in the third embodiment of the present invention, as shown in FIG. 5, is different from that in the second embodiment as follows:

The interleaving unit is built in the modulating apparatus. The modulating apparatus performs serial-parallel conversion on the bits output by the channel coding unit and distributes the converted bit streams to different layers. Different interleaving units rearrange the bit streams in different layers. Then the modulating apparatus performs ARSM on the rearranged bit streams.

In the second and third embodiments of the present invention, the transmitter includes a modulating apparatus. The basic modulated symbols of at least two layers are phase-shifted according to different phase-shift factors. Thus, equal power ARSM is implemented in at least two layers. The BLER at the terminal is therefore reduced.

The fourth embodiment of the present invention provides a method for creating a constellation map. The method includes the following steps:

modulating the input bit stream of each layer with a same modulation scheme such as equal power BPSK or QPSK to obtain basic modulated symbols;

performing phase shift on the constellation maps corresponding to the basic modulated symbols output by at least two layers according to different phase-shift factors; and

superposing the phase-shifted constellation maps of different layers to create a constellation map for mapping.

In the fourth embodiment of the present invention, phase shift is performed on the constellation maps corresponding to the basic modulated symbols output by at least two layers according to different phase-shift factors. Then, a constellation map for mapping can be obtained by superposing the phase-shifted constellation maps of different layers. It should be noted that the shift phases of the constellation maps corresponding to the basic modulated symbols output by at least two layers are different. Generally, the phase difference is larger than zero or smaller than zero.

The following description is an example based on two-layer ARSM. Suppose the spectrum efficiency is 4, which means each symbol includes four bits, and equal power QPSK is adopted for basic modulation in each layer. The phase corresponding to the phase-shift factor of the first layer is $\phi 1$ and the phase corresponding to the phase-shift factor of the second layer is $\phi 2$.

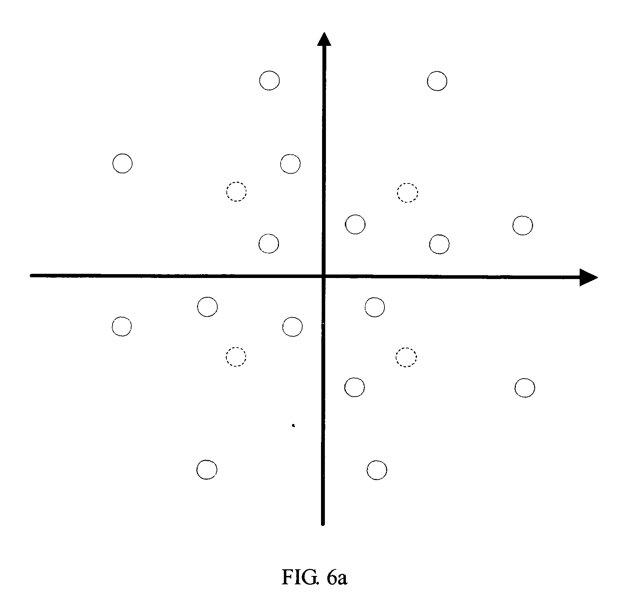

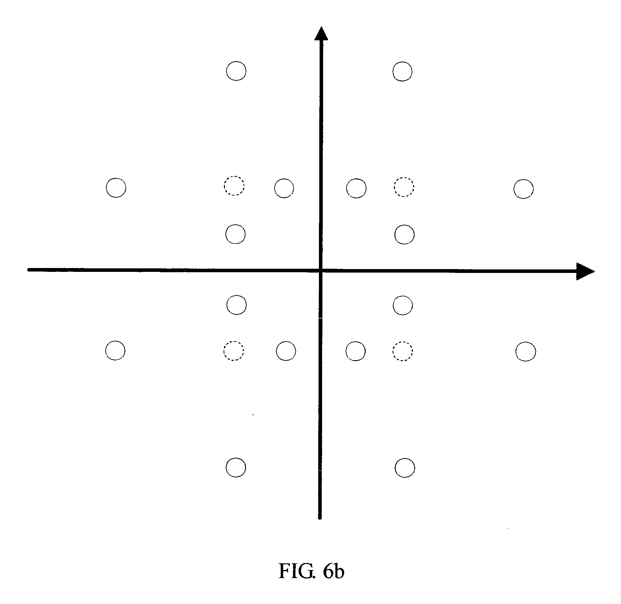

The constellation map corresponding to the basic modulated symbols output by the first layer is shifted by $\phi 1$ and the constellation map corresponding to the basic modulated symbols output by the second layer is shifted by $\phi 2$. Then the constellation maps obtained after phase shift in the two layers are superposed. When the shift angle of the first layer is 0, the shift angle of the second layer is $\pi/6$, and the shift phase difference between the two layers is $|\phi 1 - \phi 2| = \pi / 6$, the created constellation map is shown in FIG. 6a, where the broken circles represent the constellation map with QPSK/4QAM adopted for basic modulation in each layer. When the shift angle of the first layer is 0, the shift angle of the second layer is $\pi/4$, and the shift phase difference between the two layers is $|\phi 1 - \phi 2| = \pi / 4$, the created constellation map is shown in FIG. 6b, where the broken circles represent the constellation map with QPSK/4QAM adopted for basic modulation in each layer.

It should be noted that when the symbols output after phase shift in two or more layers are superposed, the shift phase may vary each time. But, so long as the phase difference between every two layers is fixed, the obtained constellation map is fixed.

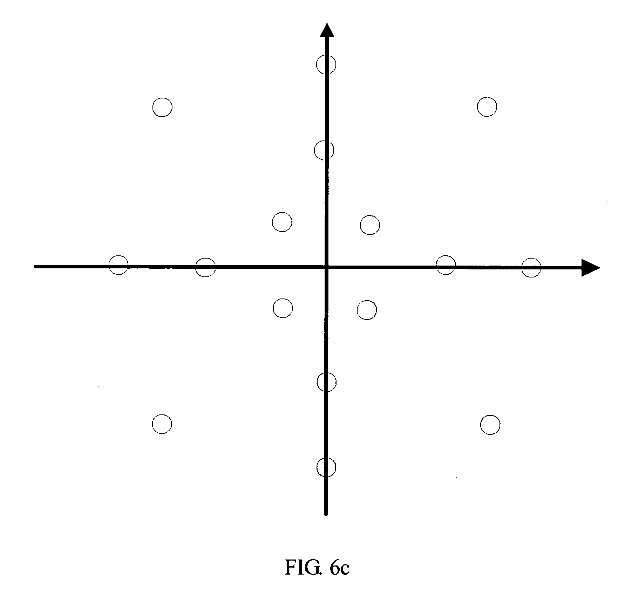

Take the constellation map obtained through two-layer ARSM with QPSK adopted for basic modulation as an example. As shown in FIG. 6c, the shift angle of the first layer is $\pi / 12$, the shift angle of the second layer is $-\pi / 12$, and the phase difference is $\pi / 6$. The constellation map can also be obtained by rotating the map shown in FIG. 6a clockwise by $\pi / 12$. The constellation map shown in FIG. 6c is equivalent to the constellation map shown in FIG. 6a. The difference is that the origin in FIG. 6c is shifted from that in FIG. 6a by $\pi / 12$.

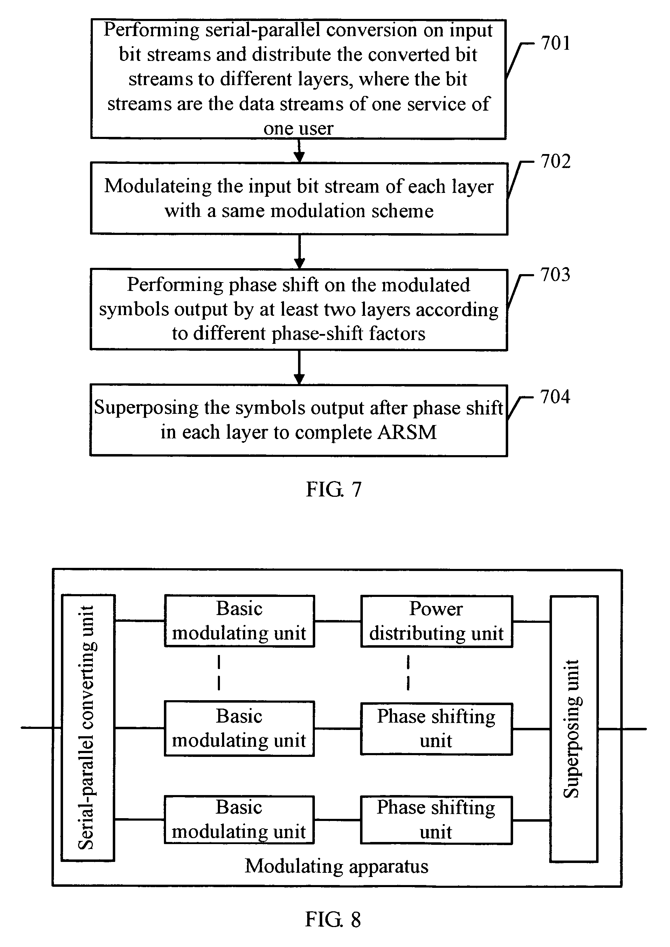

The fifth embodiment of the present invention provides a modulating method. FIG. 7 shows a procedure of the method, including the following steps:

Step 701: Performing serial-parallel conversion on input bit streams and distribute the converted bit streams to different layers, where the bit streams are the data streams of one service of one user.

Optionally, the input bit streams may be replicated and the replicated streams are distributed to different layers.

Step 702: Modulating the input bit stream of each layer with a same modulation scheme to obtain basic modulated symbols. Generally equal power BPSK or QPSK modulation is adopted. QPSK is a special application of BPSK. A QPSK symbol may be obtained by superposing two BPSK symbols, whose phase difference is $\pi / 2$.

Optionally, before modulating the bit streams, the procedure further includes: rearranging the input bit streams.

Step 703: Performing phase shift on the basic modulated symbols output by at least two layers according to different phase-shift factors.

Step 704: Superposing the symbols output after phase shift in each layer to complete the ARSM.

Therefore, in the fifth embodiment, phase shift is performed on the basic modulated symbols of at least two layers according to different phase-shift factors. Thus, equal power ARSM is implemented for the basic modulation in at least two layers. The BLER at the terminal is therefore reduced.

It should be noted when three or more layers are divided and phase shift is not performed on the basic modulated symbols output by all layers, the modulated symbols output by the remaining layers can be further modulated by using different power or any other means. As shown in FIG. 8, the basic modulated symbols output by at least two layers are further modulated by using a phase shifting unit and the basic modulated symbols output by other layers are further modulated by using a power distributing unit. In addition, because the modulated symbols of each layer are processed differently, it is convenient to demodulate the modulated symbols of each layer to obtain the original input bit stream of each layer.

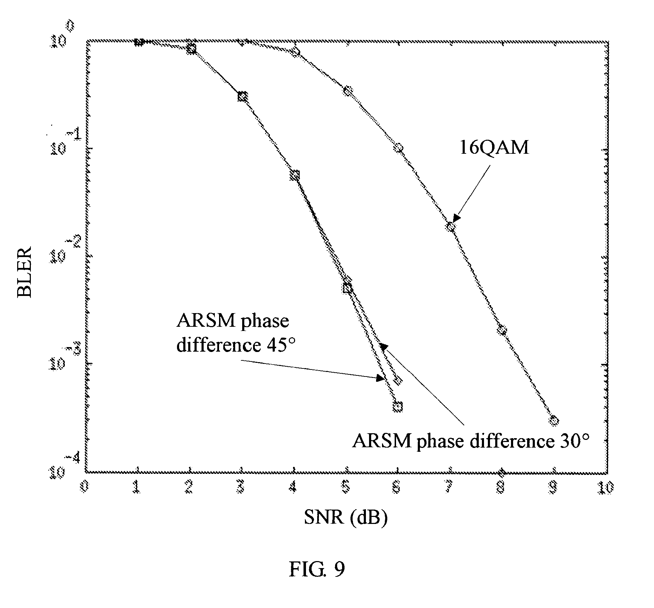

Finally, because ARSM is performed on at least two layers, the transmitted bits are more noise-resisting. For example, FIG. 9 shows the modulation of 16QAM symbols implemented by two-layer ARSM. When the phase difference between two layers is $\pi$/6 or $\pi$/4 and the Signal to Noise Ratio (SNR: Eb/No) is 3.7 dB, the BLER at the terminal can be down to 0.1. In the case of conventional 16QAM, the BLER of a terminal can reach 0.1 only when the SNR is 6 dB. The former SNR is 2.3 dB lower than the latter one.

Those skilled in the art may understand that all or part of the steps of the method in the above embodiment of the present invention may be implemented by hardware under instruction of a program. The program may be stored in a computer-readable storage medium. When being executed, the program performs the following steps:

modulating the input bit stream of each layer with a same modulation scheme to obtain modulated symbols;
performing phase shift on the constellation maps corresponding to the modulated symbols output by at least two layers according to different phase-shift factors; and
superposing the phase-shifted constellation maps of different layers to create a constellation map for mapping.

A program in another embodiment of the present invention, when being executed, performs the following steps:

modulating the input bit stream of each layer with a same modulation scheme to obtain modulated symbols;
performing phase shift on the modulated symbols output by at least two layers according to different phase-shift factors; and
superposing the modulated symbols output by each layer after the phase shift.

The storage medium may be a Read-Only Memory (ROM), a Random Access Memory (RAM), a magnetic disk or a Compact Disk (CD).

The method for creating a constellation map, the modulating method and apparatus, and the transmitter provided in the embodiments of the present invention are described above in detail. The following describes a method for obtaining the SMD during signal retransmission in an ARSM system provided in an embodiment of the present invention. The retransmission means retransmission of signals upon a transmission error. In Hybrid Automatic Repeat Request (HARQ) mode, the simplest retransmission is Chase Combining (CC), where the same signal is retransmitted after a transmission error. The SMD is a technology where the mapping from bits to symbols is changed during the retransmission with high-order QAM so that bits in different transmission processes have different reliability features and thus a transmit diversity is obtained.

In an existing high-order QAM system, such as the 16QAM system shown in FIG. 1, because of the superposition of two layers of unequal power QPSK, two bits will have high reliability and two bits will have low reliability. Take $\mathbf{b_1 b_2 b_3 b_4}$ as an example. Suppose $b_1 b_2$ are two bits of high reliability and $b_3 b_4$ are two bits of low reliability. When a transmission error occurs and retransmission is required, the high-reliability bits of the last transmission are transmitted in the low-reliability places and the low-reliability bits of the last transmission are transmitted in the high-reliability places. That is, $b_1 b_2 b_3 b_4$ is transmitted at the first time and $b_3 b_4 b_1 b_2$ is transmitted at the second time to obtain the SMD.

In an ARSM system provided in the embodiments of the present invention, the SMD and inter-layer interference are mutually convertible. Obtaining the total SMD means the total elimination of inter-layer interference. Accordingly, the total elimination of inter-layer interference means obtaining the total SMD. During the first transmission, the inter-layer interference resulting from superposition can be eliminated only through iterative detection by the receiver. During the retransmission, the retransmitted signal may be changed before the retransmission so that the receiver can process the received signals jointly to reduce or eliminate inter-layer interference and obtain the SMD.

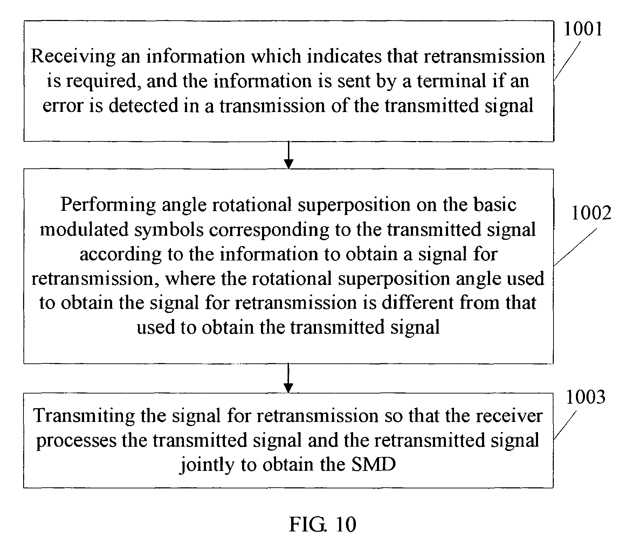

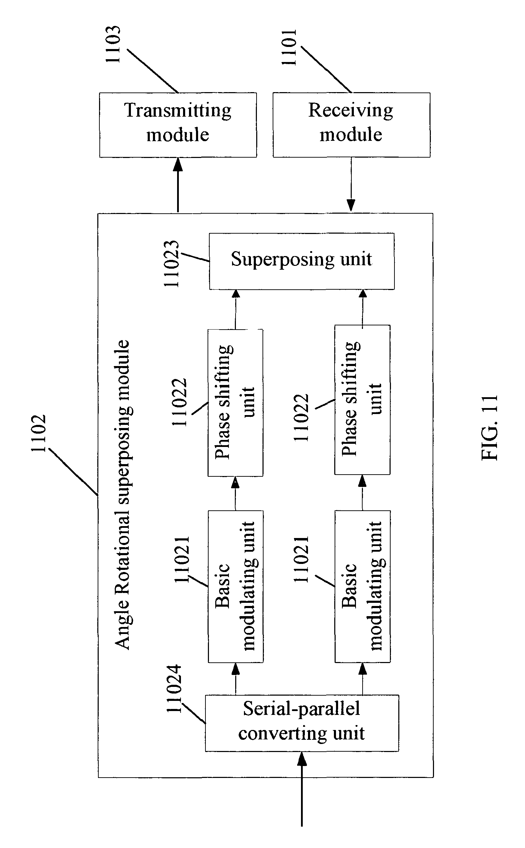

FIG. 10 gives a flowchart of the method for obtaining the SMD with the ARSM system provided in the embodiment of the present invention. FIG. 11 shows the structure of another modulating apparatus provided in an embodiment of the present invention. The method includes the following steps:

Step 1001: Receiving information which indicates that retransmission is required, and the information is sent by a terminal if an error is detected in a transmission of the transmitted signal.

When the terminal receives the signal transmitted from the ARSM system, if the terminal fails to decode the signal correctly, the terminal determines an error in the transmission of the transmitted signal and requests the ARSM system to retransmit the signal. Suppose, during the first transmission, the respective phase-shift factors selected by two phase shifting units 113 in the ARSM apparatus are: {exp(j*$\varphi$11), exp(j*$\varphi$12)}. For description purposes, it is assumed that $\varphi$11=0 and $\varphi$12=$\theta_1$. After superposition, the first transmitted signal is:

$$x_1 = s_1 + s_2 * e^{j*\theta_1}, \qquad s_1, s_2 \in QPSK \tag{1}$$

Step 1002: Performing angle rotational superposition on the basic modulated symbols corresponding to the transmitted signal according to the information to obtain a signal for retransmission. The rotational superposition angle used to obtain the signal for retransmission is different from that used to obtain the transmitted signal.

In particular, step 1002 includes:

modulating the bit streams of two layers of the transmitted signal with a same modulation scheme to obtain the basic modulated symbols of two layers;
performing phase shift on the basic modulated symbols of the two layers with phase shift factors different from those used to obtain the transmitted signal to obtain modulated symbols of the two layers; and
superposing the phase-shifted modulated symbols of the two layers to obtain the signal for retransmission.

The same modulation scheme used to modulate the input bit streams of two layers is usually equal power BPSK or QPSK. QPSK is a special application of BPSK. A QPSK symbol may be the superposition of two BPSK symbols whose phase difference is $\pi / 2$.

Suppose, during the retransmission, the respective phase-shift factors selected by two phase shifting units 113 in the ARSM apparatus are: {exp(j*f11), exp(j*f12)}. For description purposes, it is assumed that $\varphi21=0$ and $\varphi22=\theta_2$. After superposition, the retransmitted signal is:

$$x_2 = s_1 + s_2 * e^{j*\theta_2}, \qquad s_1, s_2 \in QPSK \tag{2}$$

Step 1003: Transmitting the signal for retransmission so that the terminal processes the transmitted signal and the retransmitted signal jointly to obtain the SMD. Upon reception of the retransmitted signal, the terminal processes the transmitted signal and the retransmitted signal jointly to obtain the SMD.

The terminal can combine the two signals to:

$$\begin{bmatrix} y_1 \\ y_2 \end{bmatrix} = \begin{bmatrix} 1 & e^{j*\theta_1} \\ 1 & e^{j*\theta_2} \end{bmatrix} \begin{bmatrix} s_1 \\ s_2 \end{bmatrix} + \begin{bmatrix} n_1 \\ n_2 \end{bmatrix} \tag{3}$$

where, $n_1, n_2$ are noise signals during the first transmission and the second transmission and are subject to the Gaussian distribution with the mean value 0 and the variance $\sigma^2$, that is, $n_1, n_2 \in N(0, \sigma^2)$.

The terminal solves the equation (3) so that the SNR of the received signal is obtained:

$$SNR(s_1) = E_s / \{2\sigma^2 / \left| e^{j*\theta_2} - e^{j*\theta_1} \right|^2 \} \tag{4}$$

$$SNR(s_2) = E_s / \{2\sigma^2 / \left| e^{j*\theta_2} - e^{j*\theta_1} \right|^2 \} \tag{5}$$

where, $E_s$ is the modulation power of $s_1$ and $s_2$.
To maximize the SNR of the received signal, (4) and (5) may be combined to obtain $\theta_2 = \theta_1 + \pi$, when:

$$SNR(s_1) = SNR(s_2) = 2E_s / \sigma^2 = E(x_1)/\sigma^2 = E(x_2)/\sigma^2 \tag{6}$$

From (6), it is known that the transmit energy of the ARSM system during the retransmission is all used to transmit the signal and that inter-layer interference is eliminated. This means adjusting the superposition angle of the signal can eliminate the inter-layer interference caused by superposition and obtain the total SMD.

It should be noted that the bit streams in the embodiment of the present invention are the data streams of one service of one user.

The foregoing deduction and calculation are familiar to those skilled in the art. Therefore, the deduction is not explained in detail in the embodiment of the present invention.

The method for obtaining the SMD provided in the embodiment of the present invention is described with reference to the accompanying drawing. The following will describe another ARSM apparatus provided in an embodiment of the present invention. FIG. 11 shows a structure of the ARSM apparatus provided in the embodiment of the present invention. The modulating apparatus includes:

a receiving module 1101, configured to receive information which indicates that retransmission is required, and the information is sent by a terminal if an error is detected in a transmission of the transmitted signal;

a angle rotational superposing module 1102, configured to perform angle rotational superposition on the basic modulated symbols of the transmitted signal according to the information received by the receiving module 1101 to obtain a signal for retransmission, where the rotational superposition angle used to obtain the signal for retransmission is different from the rotational superposition angle used to obtain the transmitted signal; and

a transmitting module 1103, configured to transmit the signal for retransmission obtained by the angle rotational superposing module 1102 so that the terminal processes the transmitted signal and the retransmitted signal jointly to obtain the SMD.

The angle rotational superposing module 1102 may further include two basic modulating units 11021, two phase shifting units 11022, and a superposing unit 11023. The two basic modulating units 11021 are configured to modulate the bit streams of the transmitted signal according to the information received by the receiving module 1103 with a same modulation scheme to obtain basic modulated symbols, where the modulation scheme is usually equal power BPSK or QPSK.

The two phase shifting units 11022 are configured to perform phase shift on the basic modulated symbols of two layers with phase-shift factors different from those used to obtain the transmitted signal, where different layers are usually differentiated by different phase-shift factors. The phase-shift factor is expressed by $\exp(j*\phi)$, where $\phi$ represents the shift phase. Here, $\exp(j*\phi) = e^{i\phi} = \cos\phi + j \sin \phi$.

The superposing unit 11023 is configured to superpose the phase-shifted modulated symbols of the two layers to obtain a signal for retransmission and send the signal to the terminal.

The angle rotational superposing module 1102 may further include:

a serial-parallel converting unit 11024, configured to perform serial-parallel conversion on the bit streams of the transmitted signal and distribute the converted bit streams to the basic modulating units.

Therefore, in the solution provided by the embodiments of the present invention, equal power signals of two layers are superposed and transmitted. In the embodiment of the present invention, the modulating apparatus performs phase shift on the basic modulated symbols of two layers according to phase-shift factors different from those used to obtain the transmitted signal. Thus, equal power ARSM is implemented in two layers. The BLER at the terminal is therefore reduced.

The method for obtaining the SMD provided in the embodiment of the present invention may also be applied in an ARSM system based on the modulating apparatus shown in FIG. 8. The basic modulated symbols of two layers are further modulated by the phase shifting unit and the modulated symbols output by other layers may be further modulated by a power distributing unit.

It should be noted that the bit streams in the embodiment of the present invention are the data streams of one service of one user.

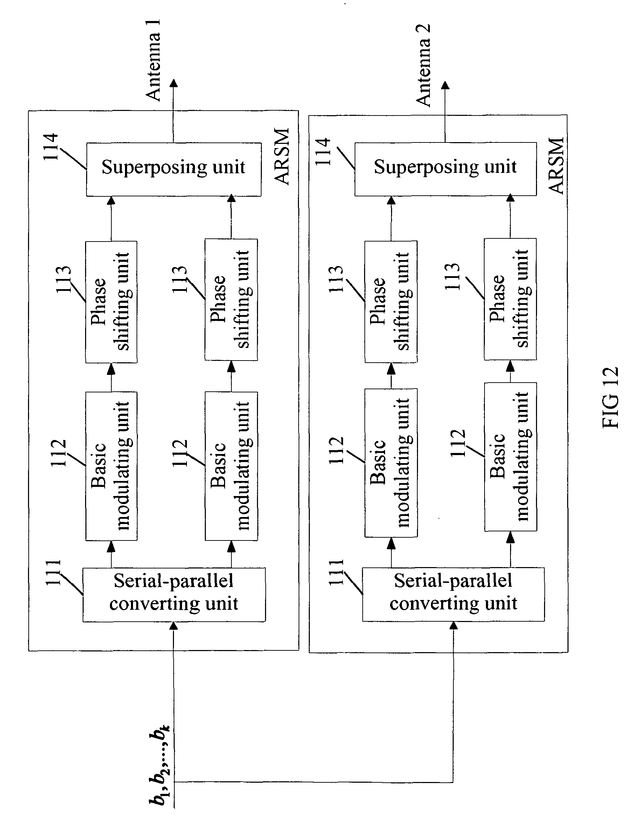

The angle rotational superposing module in the ARSM apparatus provided in the embodiment of the present invention shown in FIG. 11 may also be applied in the transmit diversity, as shown in FIG. 12. The angle rotational superposing modules of two ARSM apparatuses can constitute a modulating apparatus required by the transmit diversity. The composition of the modulating apparatus of the transmit diversity is the same as that of the angle rotational superposing module of the modulating apparatus shown in FIG. 11. The difference is that the modulating apparatus of the transmit diversity includes two angle rotational superposing modules of the modulating apparatus shown in FIG. 11. The modulating apparatus of the transmit diversity will therefore not be further described. The method and apparatus for obtaining the SMD during retransmission are described above. With the method and apparatus, when a signal needs to be retransmitted, the superposition angle of the signal is adjusted so that the terminal processes two received signals jointly. Thus, the inter-layer interference caused by superposition can be eliminated and the SMD is obtained. A system provided in an embodiment of the present invention will be described with reference to the method and apparatus for obtaining the SMD provided in the embodiments of the present invention.

The system for obtaining the SMD provided in the embodiment of the present invention includes the ARSM apparatus shown in FIG. 11. The ARSM apparatus is connected to a terminal in a communicable way.

The ARSM apparatus is configured to receive information which indicates that retransmission is required, and the information is sent by a terminal if an error is detected in a transmission of the transmitted signal. The ARSM apparatus further performs angle rotational superposition on the basic modulated symbols of the transmitted signal according to the information to obtain the signal for retransmission, where the rotational superposition angle used to obtain the signal for retransmission is different from that used to obtain the transmitted signal. The ARSM apparatus transmits the signal for retransmission so that terminal processes the transmitted signal and the retransmitted signal jointly to obtain the SMD.

In particular, the step of performing angle rotational superposition on the basic modulated symbols of the transmitted signal according to the information to obtain the signal for retransmission, where the rotational superposition angle used to obtain the signal for retransmission is different from that used to obtain the transmitted signal, includes:

modulating the bit streams of two layers of the transmitted signal with a same modulation scheme to obtain basic modulated symbols of two layers;
performing phase shift on the basic modulated symbols of the two layers with phase shift factors different from those used to obtain the transmitted signal to obtain modulated symbols of the two layers; and
superposing the phase-shifted modulated symbols of the two layers to obtain the signal for retransmission.

Therefore, in the system for obtaining the SMD provided in the embodiment of the present invention, when a signal is retransmitted, the superposition angle of the signal is changed so that the terminal processes two received signals jointly. Thus, inter-layer interference caused by superposition is eliminated and the SMD is obtained.

A method for creating a constellation map, a modulating method and apparatus and a transmitter provided in the embodiments of the present invention are described above in detail. On such basis, a method, apparatus and system for obtaining the SMD are described. The principle and implementation of the present invention are described herein through specific examples. The description about the embodiments is merely provided for ease of understanding of the present invention.

**Claims**

1. A modulating method, comprising:

modulating (702) an input bit stream of each layer with a same modulation scheme to obtain basic modulated symbols of the input bit stream of each layer, wherein the same modulation scheme is equal power Binary Phase Shift Keying, further referred to as BPSK, or equal power Quadrature Phase-Shift Keying, further referred to as QPSK;
performing (703) phase shift on the basic modulated symbols of the input bit streams of at least two layers with different phase-shift factors; and
superposing (704) the phase-shifted basic modulated symbols of the input bit streams of the at least two layers.

2. The method of claim 1, wherein before the step of modulating the input bit stream of each layer with the same modulation scheme to obtain the basic modulated symbols of the input bit stream of each layer, the method further comprises:

rearranging the input bit stream of each layer.

3. The method of claim 1 or 2, wherein when there are input bit streams of three or more layers and phase shift is not performed on basic modulated symbols of input bit streams of all layers, the method further comprises:

modulating, with unequal power, the basic modulated symbols of the input bit stream(s) of layers where phase shift is not performed; and
superposing the basic modulated symbols of the input bit streams of all layers.

4. The method of claim 1 or 2, wherein the input bit streams are data streams of one service of one user.

**5.** A modulating apparatus, comprising at least two basic modulating units (302), at least two phase shifting units (303) and a superposing unit (304), wherein
each basic modulating unit (302) is configured to modulate an input bit stream of a corresponding layer to obtain basic modulated symbols of the bit stream of the corresponding layer, wherein a modulation scheme is adopted by each basic modulating unit, wherein the modulation scheme is equal power Binary Phase Shift Keying, further referred to as BPSK, or equal power Quadrature Phase-Shift Keying, further referred to as QPSK;
each phase shifting unit (303) is configured to perform phase shift on the basic modulated symbols of the input bit stream of the corresponding layer correspondingly output by each basic modulating unit with a phase-shift factor, wherein phase-shift factors adopted by each phase shifting unit are different from each other; and
a superposing unit (304) is configured to superpose the phase-shifted basic modulated symbols of the input bit streams of the layers correspondingly output by the phase shifting units.

**6.** The apparatus of claim 5, further comprising at least two interleaving units (402), wherein
each interleaving unit is configured to rearrange an input bit stream of a layer and send the rearranged bit stream to the basic modulating units correspondingly.

**7.** The apparatus of claim 5 or 6, wherein the input bit streams are data streams of one service of one user.

**8.** A transmitter, comprising a channel coding unit (401) and the modulating apparatus (403) in claim 5 or 6, wherein
the channel coding unit (401) is configured to perform redundancy coding on input bit streams with a coding scheme and output the coded bit streams to a modulating apparatus, wherein the coding scheme of the redundancy coding is low density parity check codes, Turbo codes or convolutional codes; and
the modulating apparatus (403) is further configured to perform serial-parallel conversion on the coded bit streams output by the channel coding unit and output the converted bit streams to different layers.

**Patentansprüche**

**1.** Modulationsverfahren, umfassend:

Modulieren (702) eines Eingangsbitstroms jeder Schicht mit einem selben Modulationsschema, um grundlegende modulierte Symbole des Eingangsbitstroms jeder Schicht zu erhalten, wobei dasselbe Modulationsschema Binary Phase Shift Keying, im Weiteren als BPSK bezeichnet, mit gleicher Leistung oder Quadrature Phase Shift Keying, im Weiteren als QPSK bezeichnet, mit gleicher Leistung ist;
Ausführen (703) einer Phasenverschiebung an den grundlegenden modulierten Symbolen der Eingangsbitströme von mindestens zwei Schichten mit verschiedenen Phasenverschiebungsfaktoren; und
Überlagern (704) der phasenverschobenen grundlegenden modulierten Symbole der Eingangsbitströme der mindestens zwei Schichten.

**2.** Verfahren nach Anspruch 1, wobei das Verfahren vor dem Schritt des Modulierens des Eingangsbitstroms jeder Schicht mit demselben Modulationsschema, um die grundlegenden modulierten Symbole des Eingangsbitstroms jeder Schicht zu erhalten, ferner Folgendes umfasst:

Umordnen des Eingangsbitstroms jeder Schicht.

**3.** Verfahren nach Anspruch 1 oder 2, wobei, wenn Eingangsbitströme von drei oder mehr Schichten vorliegen und Phasenverschiebung nicht an grundlegenden modulierten Symbolen von Eingangsbitströmen aller Schichten ausgeführt wird, das Verfahren ferner Folgendes umfasst:

Modulieren der grundlegenden modulierten Symbole des Eingangsbitstroms bzw. der Eingangsbitströme von Schichten, bei denen keine Phasenverschiebung ausgeführt wird, mit ungleicher Leistung; und
Überlagern der grundlegenden modulierten Symbole der Eingangsbitströme aller Schichten.

**4.** Verfahren nach Anspruch 1 oder 2, wobei die Eingangsbitströme Datenströme eines Dienstes eines Benutzers sind.

**5.** Modulationsvorrichtung, die mindestens zwei grundlegende Modulationseinheiten (302), mindestens zwei Phasenverschiebungseinheiten (303) und eine Überlagerungseinheit (304) umfasst, wobei
jede grundlegende Modulationseinheit (302) dafür ausgelegt ist, einen Eingangsbitstrom einer entsprechenden Schicht zu modulieren, um grundlegende modulierte Symbole des Bitstroms der entsprechenden Schicht zu erhalten, wobei jede grundlegende Modulationseinheit ein Modulationsschema verwendet, wobei das Modulationsschema Binary Phase Shift Keying, im Weiteren als BPSK bezeichnet, mit gleicher Leistung oder Quadrature Phase Shift Keying, im Weiteren als QPSK bezeichnet, mit gleicher Leistung ist;

jede Phasenverschiebungseinheit (303) dafür ausgelegt ist, Phasenverschiebung an den entsprechend durch jede grundlegende Modulationseinheit ausgegebenen grundlegenden modulierten Symbolen des Eingangsbitstroms der entsprechenden Schicht mit einem Phasenverschiebungsfaktor auszuführen, wobei von jeder Phasenverschiebungseinheit verwendete Phasenverschiebungsfaktoren voneinander verschieden sind; und

eine Überlagerungseinheit (304) dafür ausgelegt ist, die durch die Phasenverschiebungseinheiten entsprechend ausgegebenen phasenverschobenen grundlegenden modulierten Symbole der Eingangsbitströme der Schichten zu überlagern.

6. Vorrichtung nach Anspruch 5, die ferner mindestens zwei Verschachtelungseinheiten (402) umfasst, wobei jede Verschachtelungseinheit dafür ausgelegt ist, einen Eingangsbitstrom einer Schicht umzuordnen und den umgeordneten Bitstrom entsprechend zu den grundlegenden Modulationseinheiten zu senden.

7. Vorrichtung nach Anspruch 5 oder 6, wobei die Eingangsbitströme Datenströme eines Dienstes eines Benutzers sind.

8. Sender, der eine Kanalkodierungseinheit (401) und die Modulationsvorrichtung (403) nach Anspruch 5 oder 6 umfasst, wobei

die Kanalkodierungseinheit (401) dafür ausgelegt ist, Redundanzkodierung an Eingangsbitströmen mit einem Kodierungsschema auszuführen und die kodierten Bitströme an eine Modulationsvorrichtung auszugeben, wobei es sich bei dem Kodierungsschema der Redundanzkodierung um Low Density Parity Check Codes, Turbo-Codes oder Faltungscodes handelt; und

die Modulationsvorrichtung (403) ferner dafür ausgelegt ist, Umsetzung von seriell in parallel an den durch die Kanalkodierungseinheit ausgegebenen kodierten Bitströmen auszuführen und die umgesetzten Bitströme an verschiedene Schichten auszugeben.

**Revendications**

1. Procédé de modulation, comprenant :

la modulation (702) d'un flux binaire d'entrée de chaque couche avec un même plan de modulation afin d'obtenir des symboles modulés de base du flux binaire d'entrée de chaque couche, le même plan de modulation étant une Modulation par Déplacement de Phase Bivalente de puissance égale, appelée plus loin BPSK, ou une Modulation par Déplacement Quadratique de Phase de puissance égale, appelée plus loin QPSK ;

l'exécution (703) d'un déphasage sur les symboles modulés de base des flux binaires d'entrée d'au moins deux couches avec des facteurs de déphasage différents ; et

la superposition (704) des symboles modulés de base déphasés des flux binaires d'entrée des au moins deux couches.

2. Procédé selon la revendication 1, comprenant en outre avant l'étape de modulation du flux binaire d'entrée de chaque couche avec le même plan de modulation afin d'obtenir les symboles modulés de base du flux binaire d'entrée de chaque couche :

la reconfiguration du flux binaire d'entrée de chaque couche.

3. Procédé selon la revendication 1 ou 2, comprenant en outre en présence de flux binaires d'entrée de trois couches ou plus et quand un déphasage n'est pas effectué sur les symboles modulés de base des flux binaires d'entrée de toutes les couches :

la modulation, avec une puissance inégale, des symboles modulés de base du ou des flux binaire (s) d'entrée de couches où le déphasage n'est pas effectué ; et

la superposition des symboles modulés de base des flux binaires d'entrée de toutes les couches.

4. Procédé selon la revendication 1 ou 2, dans lequel les flux binaires d'entrée sont des flux de données d'un service d'un usager.

**5.** Appareil de modulation, comprenant au moins deux unités de modulation de base (302), au moins deux unités de déphasage (303) et une unité de superposition (304), dans lequel

chaque unité de modulation de base (302) est configurée pour moduler un flux binaire d'entrée d'une couche correspondante afin d'obtenir des symboles modulés de base du flux binaire de la couche correspondante, un plan de modulation étant adopté par chaque unité de modulation de base, le plan de modulation étant une Modulation par Déplacement de Phase Bivalente de puissance égale, appelée plus loin BPSK, ou une Modulation par Déplacement Quadratique de Phase de puissance égale, appelée plus loin QPSK ;

chaque unité de déphasage (303) est configurée pour exécuter un déphasage sur les symboles modulés de base du flux binaire d'entrée de la couche correspondante respectivement produit en sortie par chaque unité de modulation de base avec un facteur de déphasage, les facteurs de déphasage adoptés par chaque unité de déphasage étant différents les uns des autres ; et

une unité de superposition (304) est configurée pour superposer les symboles modulés de base déphasés des flux binaires d'entrée des couches respectivement produits en sortie par les unités de déphasage.

**6.** Appareil selon la revendication 5, comprenant en outre au moins deux unités d'entrelacement (402), dans lequel chaque unité d'entrelacement est configurée pour reconfigurer un flux binaire d'entrée d'une couche et envoyer le flux binaire reconfiguré aux unités de modulation de base respectivement.

**7.** Appareil selon la revendication 5 ou 6, dans lequel les flux binaires d'entrée sont des flux de données d'un service d'un usager.

**8.** Emetteur, comprenant une unité de codage de canal (401) et l'appareil de modulation (403) selon la revendication 5 ou 6, dans lequel

l'unité de codage de canal (401) est configurée pour exécuter un codage de redondance sur des flux binaires d'entrée avec un plan de codage et produire en sortie les flux binaires codés vers un appareil de modulation, le plan de codage du codage de redondance étant des codes de vérification de parité de faible densité, des turbocodes ou des codes convolutionnels ; et

l'appareil de modulation (403) est adapté en outre pour exécuter une conversion série-parallèle sur les flux binaires codés produits en sortie par l'unité de codage de canal et produire en sortie les flux binaires convertis vers différentes couches.

FIG. 1

FIG. 2

301 302 303 304

| Serial-parallel converting unit | | Basic modulating unit | | Phase shifting unit | | Superposing unit |

Basic modulating unit — 302

Phase shifting unit — 303

FIG. 3

EP 2 234 358 B1

```
                                                      ┌─ 403
                                  ┌─ 301      ┌─ 302         ┌─ 303         ┌─ 304
  ┌─ 401      ┌─ 402       ┌──────────┐  ┌────────────┐ ┌────────────┐ ┌──────────┐
┌─────────┐ ┌──────────┐   │ Serial-  │  │   Basic    │ │   Phase    │ │          │
│ Channel │ │Interleav-│   │ parallel │  │ modulating │ │  shifting  │ │          │
│ coding  │ │  ing     │   │converting│  │   unit     │ │   unit     │ │  Super-  │
│  unit   │ │  unit    │   │  unit    │  └────────────┘ └────────────┘ │ posing   │
└─────────┘ └──────────┘   │          │         ┊            ┊         │  unit    │
                           │          │  ┌─ 302  ┊     ┌─ 303 ┊        │          │
                           │          │  ┌────────────┐ ┌────────────┐ │          │
                           │          │  │   Basic    │ │   Phase    │ │          │
                           │          │  │ modulating │ │  shifting  │ │          │
                           │          │  │   unit     │ │   unit     │ │          │
                           └──────────┘  └────────────┘ └────────────┘ └──────────┘

                                       Modulating apparatus
```

FIG. 4

FIG. 5

FIG. 6a

FIG. 6b

FIG. 6c

Performing serial-parallel conversion on input bit streams and distribute the converted bit streams to different layers, where the bit streams are the data streams of one service of one user ⟋ 701

Modulateing the input bit stream of each layer with a same modulation scheme ⟋ 702

Performing phase shift on the modulated symbols output by at least two layers according to different phase-shift factors ⟋ 703

Superposing the symbols output after phase shift in each layer to complete ARSM ⟋ 704

FIG. 7

| Basic modulating unit | Power distributing unit |
| Basic modulating unit | Phase shifting unit |
| Basic modulating unit | Phase shifting unit |

Serial-parallel converting unit

Superposing unit

Modulating apparatus

FIG. 8

FIG. 9

Receiving an information which indicates that retransmission is required, and the information is sent by a terminal if an error is detected in a transmission of the transmitted signal

1001

Performing angle rotational superposition on the basic modulated symbols corresponding to the transmitted signal according to the information to obtain a signal for retransmission, where the rotational superposition angle used to obtain the signal for retransmission is different from that used to obtain the transmitted signal

1002

Transmiting the signal for retransmission so that the receiver processes the transmitted signal and the retransmitted signal jointly to obtain the SMD

1003

FIG. 10

FIG. 11

FIG 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007136211 A2

- WO 0139454 A1